# EUROPÄISCHE PATENTSCHRIFT

(11) **EP 0 727 271 B1**
(45) Veröffentlichungstag und Bekanntmachung des Hinweises auf die Patenterteilung: **17.06.1998**
(21) Anmeldenummer: 95120054.2
(22) Anmeldetag: 16.12.1995
(51) Int. Cl.: B23D 59/00, B27G 19/10

(54) **Vorrichtung zum Feineinstellen der lateralen Position eines schwenkbaren Vorritzsägeblattes einer Kreissäge**
Device for finely adjusting the lateral position of a pivotable scoring blade in a circular saw
Dispositif pour l'ajustement fine de la position latérale d'une lame de scie à inciser sur une scie circulaire

(30) Priorität: 23.12.1994 DE 9420807 U
(43) Veröffentlichungstag der Anmeldung: 21.08.1996
(73) Patentinhaber: Wilhelm Altendorf GmbH & Co. KG, D-32429 Minden (DE)
(72) Erfinder: Thiele, Siegfried, D-32429 Minden (DE); Sensmeier, Jürgen, D-32584 Löhne (DE)
(74) Vertreter: Eisenführ, Speiser & Partner

(56) Entgegenhaltungen:
- EP-A- 0 189 095
- EP-A- 0 455 592
- S. HILDEBRAND: "Feinmechanische Bauelemente" 1983 , CARL HANSER VERLAG , MUENCHEN (DE) XP002000292 4. stark bearbeitete Auflage * Seite 556 - Seite 557 * * Seite 598 - Seite 599 *

## Beschreibung

Die Erfindung bezieht sich auf eine Vorrichtung zum Feineinstellen der Position des Vorritzsägeblattes einer Kreissäge mit einem Schlitten, auf dem die Welle des Vorritzsägeblattes gelagert ist und der wenigstens eine erste Gewindebohrung aufweist sowie mit einer Führungsschiene, welche parallel zur Welle des Vorritzsägeblattes verläuft, und auf der der Schlitten in Schienenlängsrichtung verschiebbar sowie um eine Längsachse der Schiene schwenkbar angeordnet ist.

Bei technischen Geräten besteht immer wieder die Notwendigkeit, verschiedene Positionen eines Bauteils genau einzustellen. Ein besonderer Anwendungsfall im groben Betrieb ist bei Kreissägen gegeben, wenn diese mit einem Vorritzaggregat ausgestattet sind.

Kreissägen sind als effiziente Maschinen zum Zuschneiden von Werkstücken namentlich aus Holz weit verbreitet. Sie können zum Schneiden beispielsweise doppelseitig beschichteter Platten mit einem Vorritzaggregat ausgerüstet sein, das ein ausrißfreies Schneiden der Unterseiten derartiger Platten ermöglicht. Wesentliches Element eines solchen Vorritzaggregates ist ein Vorritzsägeblatt, welches üblicherweise einen kleineren Durchmesser als das Hauptsägeblatt hat und so angeordnet ist, daß das Schnittgut zunächst das Vorritzsägeblatt passiert, bevor es zum Hauptkreissägeblatt gelangt. Das Vorritzsägeblatt ragt nur wenig über die Auflagefläche für das Schnittgut hinaus, so daß das Schnittgut keinesfalls schon von dem Vorritzsägeblatt vollständig durchtrennt wird. Notwendige Voraussetzungen dafür, daß der gewünschte Effekt eines sauberen Schnittes sowohl an der Oberseite als auch der Unterseite einer beidseitig beschichteten Platte eintritt, ist, daß die Schnittfuge des Vorritzsägeblattes exakt mit der des Hauptsägeblattes zusammenfällt. Um dies zu gewährleisten, muß das Vorritzsägeblatt lateral sehr genau positioniert werden können. Eine hohe Wiederholgenauigkeit ist dabei wünschenswert.

Darüber hinaus ist eine Höhenverstellung des Vorritzsägeblattes wünschenswert, um das Vorritzsägeblatt beispielsweise unter die Auflagefläche für das Schnittgut versenken zu können oder um für verschieden starkes Schnittgut die Eindringtiefe des Vorritzsägeblattes einstellen zu können.

Aufgabe der Erfindung ist es, eine Vorrichtung anzugeben, die der exakten Positionierung eines verschiebbaren Bauteils wie beispielsweise eines ein Vorritzsägeblatt tragenden Schlittens entlang einer Achse dient, eine Höhenverstellung zuläßt und ohne großen fertigungstechnischen Aufwand zu realisieren ist.

Als Lösung für diese Aufgabe wird eine Vorrichtung der eingangs genannten Art vorgeschlagen mit einem Schenkel, der auf der Schiene befestigt sowie mit dieser um deren Längsachse schwenkbar ist und wenigstens eine zweite Gewindebohrung aufweist, und einem um seine Längsachse drehbaren Gewindebolzen mit zwei Gewindeabschnitten gleicher Gewindeorientierung und unterschiedlicher Gewindesteigung, von denen der eine Gewindeabschnitt in die erste Gewindebohrung am Schlitten und der andere Gewindeabschnitt in die zweite Gewindebohrung am Schenke eingreift.

Zwar ist das hier angewandte Prinzip der Differentialschraube grundsätzlich bereits bekannt (Siegfried Hildebrand, FEINMECHANISCHE BAUELEMENTE, 4. Aufl. 1983, S. 556, 557 und S. 598, 599). Der unmittelbaren Anwendung dieses Prinzips steht aber die Forderung entgegen, daß neben der lateralen Feineinstellung beispielsweise eines Vorritzsägeblattes auch eine Höhenverstellung ermöglicht werden soll. Dies gelingt mit der erfindungsgemäßen Vorrichtung auf besonders einfache und elegante Weise.

In einer bevorzugten Ausführungsform ist der Gewindebolzen an einen Antriebsmotor angekoppelt. Dabei sind der Antriebsmotor und der Gewindebolzen bevorzugt gemeinsam relativ zum unverrückbaren ersten Gegengewinde in Achsrichtung des Gewindebolzens beweglich.

Weiterhin wird eine Variante der Vorrichtung für das Feineinstellen des lateralen Position des Vorritzsägeblattes einer Kreissäge angegeben, bei der das längsbewegliche Bauteil ein das Vorritzsägeblatt tragender Schlitten ist und bei der das in seiner Längsrichtung unverrückbare erste Gegengewinde vorzugsweise einen festen Abstand zur Schnittebene des Hauptkreissägeblattes der Kreissäge hat.

Die Erfindung soll nun anhand eines Ausführungsbeispiels und der dazugehörigen Figuren näher erläutert werden. Es zeigen:
- Fig. 1: eine Draufsicht auf einen Teil eines Vorritzaggregates mit Vorrichtung zum Feineinstellen;

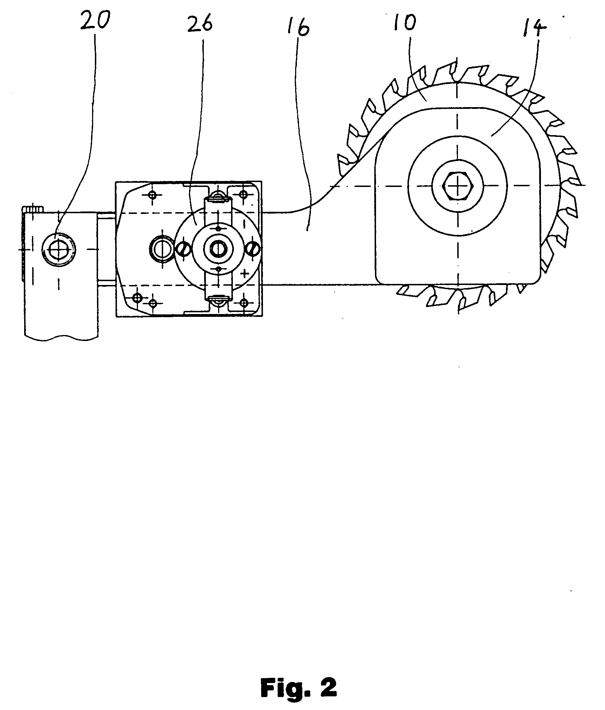

- Fig. 2: eine Seitenansicht der Aggregatteile aus Fig. 1.

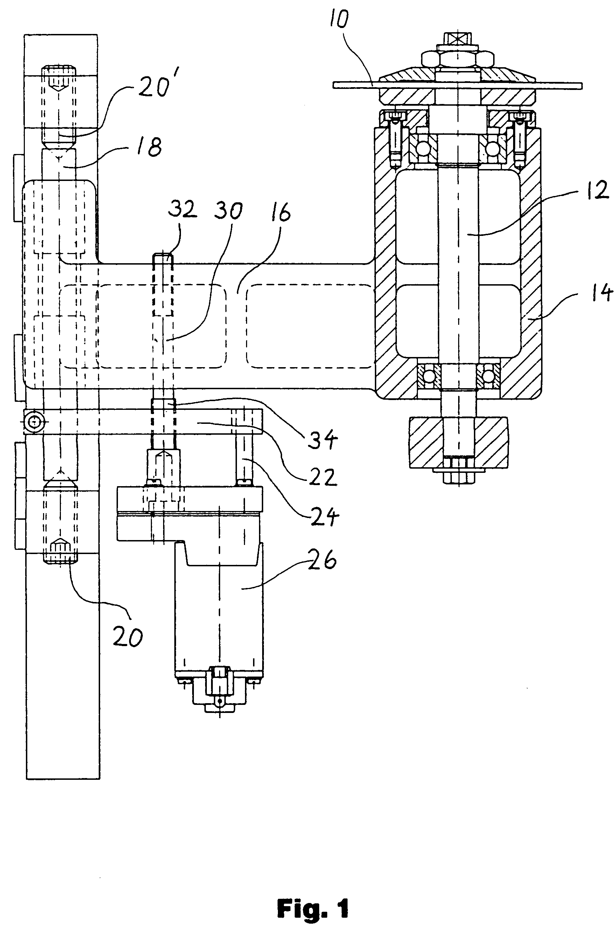

Alle für die Erfindung wesentlichen Elemente eines Vorritzaggregates sind in Fig. 1 zu erkennen. Das Vorritzsägeblatt 10 ist mit einer Welle 12 verschraubt, die in einem ein Lagergehäuse 14 bildenden Teil eines Schlittens 16 zweifach kugelgelagert ist. Der Schlitten 16 ist auf einer Führungsschiene 18 in Längsrichtung der Welle 12 verschiebbar angebracht. Die Führungsschiene 18 ist wiederum durch zwei Schraubbolzen 20, 20' mit jeweils einem spitzen Ende mit dem Gestell einer Kreissäge verbunden, indem die spitzen Enden in Vertiefungen an den beiden Enden der Führungschiene 18 hineinragen und diese einspannen. Auf der Führungsschiene 18 ist ein Schenkel 22 mittels eines Klemmauges unverrückbar befestigt. Teil des Schenkels 22 ist ein sowohl zur Führungsschiene 18 als auch zur Welle 12 parallel ausgerichteter Führungsbolzen 24, welcher längsverschiebbar einen Motor 26 trägt.

Der Schlitten 16, der Schenkel 22 und der Motor 26 sind über einen Doppelgewindebolzen 30 miteinander verbunden. Dieser Doppelgewindebolzen 30 weist zwei Gewindeabschnitte auf, von denen sich der erste Gewindeabschnitt 32 am Ende des Doppelgewindebolzens 30 befindet und von einem passenden Innengewinde im längsverschiebbaren Schlitten 16 aufgenommen wird, während der zweite Gewindeabschnitt 34 des Doppelgewindebolzens 30 in ein passendes Innengewinde im unverrückbaren Schenkel 22 eingreift.

Der zweite Gewindeabschnitt 34 unterscheidet sich von dem ersten Gewindeabschnitt 32 dadurch, daß er einen größeren Außendurchmesser und eine größere Gewindesteigung hat. Die Gewindeorientierung der beiden Gewindewindeabschnitte 32, 34 ist die gleiche, d.h. daß entweder beide Gewindeabschnitte 32, 34 mit einem Linksgewinde versehen sind oder beide ein Rechtsgewinde aufweisen.

Das dem ersten Gewindeabschnitt 32 gegenüberliegende Ende des Doppelgewindebolzens 30 ist über ein Getriebe mit der Welle des Motors 26 verbunden. Mit Hilfe dieses Motors 26 kann der Doppelgewindebolzen 30 wahlweise in eine Rechts- oder eine Linksdrehung versetzt werden. Folge einer Drehbewegung des Doppelgewindebolzens 30 ist, daß sich der Gewindebolzen 30 in die Innengewinde im Schenkel 22 und im Schlitten 16 in gleicher Richtung aber nicht gleich weit hinein- oder herausschraubt, da die Gewindeabschnitte 32 und 34 zwar gleichsinnig sind, aber eine unterschiedliche Steigung haben. Da weiterhin der Schenke 22 unverrückbar an der Führungsschiene 18 befestigt ist, während der Schlitten 16 eine Längsbewegung entlang der Führungsschiene 18 ausführen kann, ergibt sich durch den Einsatz des den Schenkel 22 und den Schlitten 16 verbindenden Doppelgewindebolzens 30 mit Gewindeabschnitten 32, 34 unterschiedlicher Steigung die gewünschte feine Enstellmöglichkeit für die laterale Position des Vorritzsägeblattes 10 aus der durch Drehen des Gewindebolzens 30 hervorgerufenen und von der Steigungsdifferenz der Gewindeabschnitte 32, 34 bestimmten Relativbewegung des Schlittens 16 bezüglich der Führungsschiene 18.

Zur detaillierteren Erläuterung eines solchen Einstellvorganges soll im folgenden angenommen werden, daß die Gewindeabschnitte 32, 34 mit Rechtsgewinden versehen sind und der Gewindebolzen 30 vom Motor 26 aus betrachtet eine Rechtsdrehung ausführt. Während einer Umdrehung schraubt sich der Doppelgewindebolzen 30 um eine der Steigung S2 entsprechende Länge in das Innengewinde in dem unverrückbaren Schenkel 22 hinein, d.h. er hat sich nach einer Umdrehung mit Bezug auf die Zeichnung um die Distanz S2 nach links bewegt.

Gleichzeitig hat sich der Doppelgewindebolzen 30 um eine der Steigung S1 seines ersten Gewindeabschnittes 32 entsprechende Länge durch das Innengewinde im Schlitten 16 hindurch geschraubt. Hieraus ergibt sich pro Bolzenumdrehung eine Relativbewegung zwischen dem Schlitten 16 und dem Doppelgewindebolzen 30 um die Distanz S1. Aus einer Überlagerung der größeren Linksbewegung des Gewindebolzens 30 bezüglich der Führungsschiene 18 und der kleineren Relativbewegung zwischen dem Doppelgewindebolzen 30 und dem Schlitten 16 resultiert ein Linksversatz des Schlittens 16 bezüglich der Führungsschiene 18 und damit der Kreissäge. Dieser Linksversatz des Schlittens 16 bezüglich der Kreissäge während einer Umdrehung des Doppelgewindebolzens 30 errechnet sich zu S2 - S1, es kommt also nur die Differenz der Gewindesteigungen der beiden Gewindeabschnitte 32 und 34 am Doppelgewindebolzen 30 für den Linksversatz zum Tragen.

Der besondere Vorteil der Erfindung besteht darin, daß eine besonders feine Schlittenverstellung erreicht wird, ohne daß hierzu teuer herzustellende Spezialgewinde mit extrem kleiner Steigung benötigt werden oder andere aufwendige Maßnahmen ergriffen werden müssen.

Die Montage der Führungsschiene 18 zwischen zwei spitzen Schraubbolzen 20 erlaubt der gesamten Vorrichtung bestehend aus Führungsschiene 18, Schlitten 16, Antriebsträger 22 sowie den an diesen Teilen befestigten Elementen, wie insbesondere dem Sägeblatt 10 eine Schwenkbewegung um die Längsachse der Führungsschiene 18, so daß die Höhe eingestellt werden kann, die das Sägeblatt 10 über eine Werkstückauflagefläche einer Kreissäge hinausragt. Des weiteren kann die laterale Position des Vorritzsägeblattes mit üblichen Mitteln gemessen und abgelesen werden.

## Patentansprüche

1. Vorrichtung zum Feineinstellen der Position des Vorritzsägeblattes (10) einer Kreissäge
mit einem Schlitten (16), auf dem die Welle (12) des Vorritzsägeblatte (10) gelagert ist und der wenigstens eine erste Gewindebohrung aufweist
sowie mit einer Führungsschiene (18), welche parallel zur Welle (12) des Vorritzsägeblattes (10) verläuft, und auf der der Schlitten (16) in Schienenlängsrichtung verschiebbar sowie um eine Längsachse der Führungsschiene (18) schwenkbar angeordnet ist,
**gekennzeichnet durch**
einen Schenkel (22), der auf der Führungsschiene (18) befestigt sowie mit dieser um deren Längsachse schwenkbar ist und wenigstens eine zweite Gewindebohrung aufweist,
und einen um seine Längsachse drehbaren Gewindebolzen (30) mit zwei Gewindeabschnitten (32, 34) gleicher Gewindeorientierung und unterschiedlicher Gewindesteigung, von denen der eine Gewindeabschnitt (32) in die erste Gewindebohrung am Schlitten (16) und der andere Gewindeabschnitt (34) in die zweite Gewindebohrung am Schenkel (22) eingreift.

2. Vorrichtung nach Anspruch 1, dadurch gekennzeichnet, daß der Gewindebolzen (30) an einen Antriebsmotor (26) angekoppelt ist.

3. Vorrichtung nach Anspruch 2, dadurch gekennzeichnet, daß der Antriebsmotor (26) und der Gewindebolzen (30) gemeinsam relativ zum unverrückbaren ersten Gegengewinde in Achsrichtung des Gewindebolzens beweglich sind.

4. Vorrichtung nach einem der Ansprüche 1 bis 3, dadurch gekennzeichnet, daß das längsbewegliche Bauteil ein ein Vorritzsägeblatt (10) einer Kreissäge tragender Schlitten (16) ist.

5. Vorrichtung nach einem der Ansprüche 1 bis 4, dadurch gekennzeichnet, daß das in seiner Längsrichtung unverrückbare erste Gegengewinde einen festen Abstand zur Schnittebene des Hauptkreissägeblattes einer Kreissäge hat.

## Claims

1. Device for fine adjustment of the position of the scoring saw blade (10) of a circular saw with a carriage (16) on which the shaft (12) of the scoring saw blade (10) is supported and which has at least one first tapped hole together with a guide rail (18), which runs parallel to the shaft (12) of the scoring saw blade (10), and on which the carriage (16) is arranged so that it is displaceable in the longitudinal direction of the rail and capable of swiveling about the longitudinal axis of the guide rail (18), **characterized by** an arm (22), which is fixed on the guide rail (18) and is capable of swiveling about the longitudinal axis thereof and has at least one second tapped hole, and a threaded bolt (30), rotatable about its longitudinal axis, having two threaded sections (32, 34) of identical thread orientation and differing thread lead, of which one threaded section (32) engages in the first tapped hole on the carriage (16) and the other threaded section (34) engages in the second tapped hole on the arm (22).

2. Device according to claim 1, characterized in that the threaded bolt (30) is coupled to a drive motor (26).

3. Device according to claim 2, characterized in that the drive motor (26) and the threaded bolt (30) are moveable together in the axial direction of the threaded bolt relative to the immovable first counter thread.

4. Device according to one of claims 1 to 3, characterized in that the longitudinally moveable component is a carriage (16) carrying a scoring saw blade (10) of a circular saw.

5. Device according to one of claims 1 to 4, characterized in that the first counter thread, immovable in its longitudinal direction, is at a fixed distance from the cutting plane of the main circular saw blade of a circular saw.

## Revendications

1. Dispositif pour l'ajustement précis de la position de la lame de scie à inciser (10) d'une scie circulaire, équipé d'un coulisseau (16) sur lequel est logé l'arbre (12) de la lame de scie à inciser (10) et qui présente au moins un premier alésage fileté, ainsi que d'un rail de guidage (18) qui se déplace parallèlement à l'arbre (12) de la lame de scie à inciser (10) et sur lequel le coulisseau (16) est agencé de manière à coulisser longitudinalement par rapport au rail et à pivoter autour de l'arbre longitudinal du rail de guidage (18), caractérisé par un montant (22) qui est fixé sur le rail de guidage (18) et peut pivoter avec celui-ci autour de son arbre longitudinal et présente au moins un deuxième alésage fileté, et par un boulon fileté (30) pouvant tourner autour de son arbre longitudinal avec deux segments filetés (32, 34) ayant la même orientation de filetage mais un pas de filetage différent, le premier segment fileté (32) s'engrenant dans le premier alésage fileté au niveau du coulisseau (16) et l'autre segment fileté (34) dans le deuxième alésage fileté au niveau du montant (22).

2. Dispositif selon la revendication 1, caractérisé en ce que le boulon fileté (30) est couplé à un moteur d'entraînement (26).

3. Dispositif selon la revendication 2, caractérisé en ce que le moteur d'entraînement (26) et le boulon fileté (30) sont mobiles ensemble par rapport au premier filetage inverse fixe dans le sens axial du boulon fileté.

4. Dispositif selon l'une quelconque des revendications 1 à 3, caractérisé en ce que la pièce mobile longitudinalement est un coulisseau supportant une lame de scie à inciser (10) d'une scie circulaire.

5. Dispositif selon l'une quelconque des revendications 1 à 4, caractérisé en ce que le premier filetage inverse fixe dans le sens de sa longueur est espacé d'un intervalle fixe par rapport au plan de coupe de la lame principale de scie circulaire d'une scie circulaire.
